## Europäisches Patentamt

## European Patent Office

## Office européen des brevets

(11) Publication number: **0 022 506**
**A1**

## (12) EUROPEAN PATENT APPLICATION

(21) Application number: **80103706.0**

(22) Date of filing: **30.06.80**

(51) Int. Cl.³: **G 01 N 21/85**, G 02 B 19/00

(30) Priority: **17.07.79 DE 2928887**

(43) Date of publication of application: **21.01.81**
**Bulletin 81/3**

(84) Designated Contracting States: **FR GB IT**

(71) Applicant: **Erwin Sick GmbH Optik-Elektronik,
Sebastian-Kneipp-Strasse 1, D-7808 Waldkirch (DE)**

(72) Inventor: **Sick, Erwin, Stifterweg 6, D-8021 Icking (DE)**

(74) Representative: **Patentanwälte Manitz, Finsterwald und
Grämkow, Robert-Koch-Strasse 1,
D-8000 München 22 (DE)**

(54) Optical measuring apparatus.

(57) An optical measuring device particularly for smoke or gas density measurements projects a beam of light through a region (22) to a retro-reflector (12) from which a portion of the light is returned via a beam dividing mirror (24) to measuring apparatus (23). A uniform beam of light is achieved in the region (22) by means of a special honeycomb lens condensor system (18, 19, 20). In the honeycomb lens condensor system a first lens (18) renders light received from a filament (14) into a parallel light beam which impinges on a first honeycomb lens (19a) which consists of an array of individual lenses (19'). The individual lenses (19') of the first honeycomb lens (19a) form individual images of the filament (14) at the individual lenses (19b) of a second honeycomb lens spaced by a distance A from the first honeycomb lens. A field lens (20) cooperates with the second honeycomb lens (19b) to superimpose all the images so as to uniformly illuminate an aperture (16). A microobjective (15) then cooperates with a front lens (13) to form the image of the aperture (16) at infinity. The first and second honeycomb lenses (19a, 19b) can be formed on opposite sides of a block transparent material and are preferably of hexagonal form.

0022506

# TITLE

see front page

The present invention relates to optical measuring apparatus
and has particular reference to an arrangement in which
a measurement light beam is projected towards a retro-reflector by a front objective, in which the image of a light
source is formed, and which cooperates in turn with a
microobjective to project an image of a uniformly illuminated aperture at infinity.

Optical measuring apparatus of this kind is particularly
useful for measuring the concentration of sulfur dioxide
and also for measuring smoke densities. For this purpose
is already known to use Köhler illumination to uniformly
illuminate the retro-reflector with a beam having a greater
cross-sectional area than the retro-reflector so that the
beam extends beyond all the sides of the retro-reflector. This
avoids  change of the measuring signal due to vibration
induced relative movements between the retro-reflector and
the light beam. Despite this arrangement the known optical
measuring apparatus is still sensitive to adjustment
tolerances at right angles to the optical axis of the
luminous  filament of the light source that is used.

The principal object underlying the invention is thus to
provide optical measuring apparatus of the above generally
described kind which is extremely insensitive to adjustment
tolerances of the filament of the light source that is
used, in particular in directions at right angles to the
optical axis, and which also ensures a particularly uniform
illumination of the retro-reflector.

In accordance with the present invention the above object
is satisfied by optical measuring apparatus having a
measurement light beam, a retro-reflector, a front objective

**0022506**

in which the image of a light source is formed and which
in turn, together with a microobjective, images a uniformly
illuminated aperture at infinity and wherein said aperture
is illuminated by a honeycomb lens condensor system which
includes a condensor lens for rendering parallel the
light received from the light source and a first honey-
comb lens arranged after said condensor lens which, together therewith, projects light source images into the
individual lenses of a second honeycomb lens which is
constructed to be of the same size as said first honeycomb lens, which renders parallel the light leaving points
of said first honeycomb lens and which directs this light
onto a field lens which, together with the individual
lenses of said second honeycomb lens images the apertures
of the individual lenses of said first honeycomb lens in
said first mentioned aperture.

The device is preferably so constructed that the two honeycomb
lenses are formed on a single honeycomb block having a depth
such that the light source images are formed at the individual
lenses of the second honeycomb lens.

As a result of this construction an extremely high degree
of uniformity of illumination is achieved at that aperture
of the measuring device which requires to be uniformly
illuminated. This takes place because the radiation
characteristic (indicatrix) of the filament is distributed
over a large number of individual honeycomb lenses.

In this connection is should be mentioned that a honeycomb
condensor is indeed already known which serves to improve
the illumination of an aperture (cf. G. Schröder, Technische
Optik, Vogel-Verlag, 2nd edition, 1977, page 116) however
in this case two honeycomb lenses of different sizes are
required and the illumination of the aperture takes place
via the individual lenses of the second honeycomb lens.

0022506

In contrast the arrangement in accordance with the invention
uses two honeycomb lenses which are of the same size, and
which are indeed preferably manufactured in one piece, and
a field lens is inserted after the second honeycomb lens
in order to form all the images of the apertures of the
individual lenses of the first honeycomb lens at the
same position, namely at the afore-mentioned aperture.
It is only as a result of these measures that an extremely
high degree of uniformity of the light beam in the aperture
is achieved i.e. that the aperture is filled by a light
bead of uniform illumination which then acts quasi as
a secondary light source for the generation of the actual
measurement light beam.

Other objects and aims of the invention will become clear
from the following description and claims and it will be
particularly noted that the invention is not necessarily
restricted to optical density measuring apparatus but
can indeed be used for other purposes in which it is
desirable to form a uniform light beam for measuring
and diagnostic purposes.

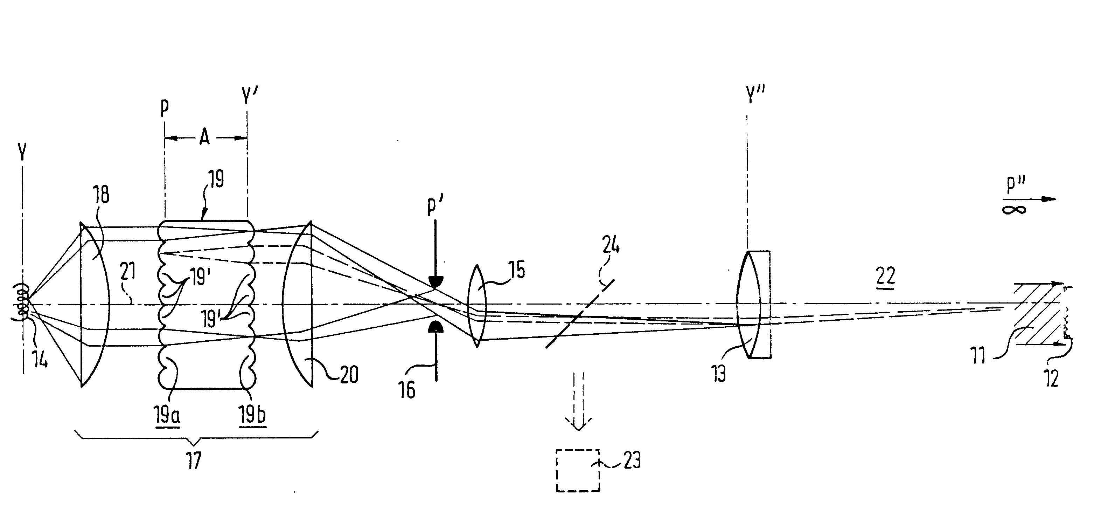

The invention will now be described in detail by way of
example only and with reference to the accompanying drawing
the single figure of which shows in schematic illustration
the beam path of optical measuring apparatus in accordance
with the invention.

As shown in the drawing a first condensor lens 18 is
arranged in front of the filament 14 of a light source in the form
of a lamp. The first condensor lens 18 renders parallel
the light leaving the luminous filament 14 and
directs it to a first honeycomb lens arrangement 19a which
preferably consists of hexagonal individual lenses 19'
arranged together in a surface-like formation. The honeycomb lens arrangement 19a is united with a second honeycomb lens arrangement 19b, spaced from the first at a
distance A, to form a unitary component 19. The optical

data of the first and second honeycomb lens arrangements
are so chosen that the parallel light beams entering the
individual lenses 19' of the first honeycomb lens arrangement 19a are focussed at the location of the individual
lenses 19' of the second honeycomb lens arrangement 19b.
As a result the plane Y of the luminous filament is imaged
in the plane Y' of the second honeycomb lens arrangement
19b and indeed individually in the individual lenses 19'
of the second honeycomb lens arrangement 19b.

A field lens 20 is arranged after the second honeycomb
lens 19b and cooperates with the individual lenses 19'
of the second honeycomb lens 19b to image the apertures
of the individual lenses 19' of the first honeycomb lens
arrangement 19a at, or in, an aperture 16. The beam path
for this image formation is indicated in broken lines
in the drawing. The imaging of the luminous filament 14 in
the various planes Y' and Y'' is illustrated in solid
lines.

As a result of this imaging system the individual images
of the apertures of the individual lenses 19' of the first
honeycomb lens arrangement 19a are superimposed in the
aperture 16 so that any irregularities in the illumination
of the individual apertures are extensively erradicated.
A completely homogenous uniform light bead is thus present
in the aperture 16 the uniformity and light intensity of
which is also independent of small displacements of the
luminous filament 14 in directions at right angles to
the optical axis 21.

The elements 18, 19 and 20 thus form a honeycomb lens
condensor system.

The actual measurement beam path is then created downstream
of the aperture 16 via a microobjective 15, a front lens
13 and the retro-reflector 12. The region in which the

0022506

measurement takes place is located between the front lens 13 and the retro-reflector 12 and is indicated by the reference numeral 22. The light beam is schematically illustrated at 11 and radiates beyond all sides of the retro-reflector 12.

The micro-objective 15 together with the field lens 20 images the light source images in the front lens at Y' and the front lens 13 in turn, together with the micro-objective 15, images the aperture 16 (P') at infinity (P'') i.e. substantially at the retro-reflector 12.

The receiving device which completes the associated measuring means is only briefly indicated in broken lines at 23. Light reaches the device 23 via a beam dividing mirror 24 which is likewise only illustrated in broken lines.

It will be appreciated that modifications can be made to the described arrangement without departing from the scope of the present teaching. It is for example contemplated that the preferred honeycomb lenses could simply be replaced by equivalent arrays of individual lenses.

BAD ORIGINAL

I claim:

1. Optical measuring apparatus having a measurement light beam (22), a retro-reflector (12), a front objective (13) in which the image of a light source (24) is formed and which in turn, together with a microobjective (15), images a uniformly illuminated aperture (16) at infinity and wherein said aperture (16) is illuminated by a honeycomb lens condensor system (17) which includes a condensor lens (18) for rendering parallel the light received from the light source (14) and a first honeycomb lens (19a) arranged after said condensor lens (18) which, together therewith, projects light source images into the individual lenses (19') of a second honeycomb lens (19b) which is constructed to be of the same size as said first honeycomb lens (19a), which renders parallel the light leaving points of said first honeycomb lens (19a) and which directs this light onto a field lens (20) which, together with the individual lenses (19') of said second honeycomb lens (19b) images the apertures of the individual lenses (19') of said first honeycomb lens (19a) in said first mentioned aperture (16).

2. Optical measuring apparatus in accordance with claim 1 and wherein said first and second honeycomb lenses (19a, 19b) are formed on a single honeycomb block (19) having a depth (A) such that said light source images are formed in the individual lenses (19') of said second honeycomb lens (19b).

3. Optical measuring apparatus including a condensor lens system (17) for substantially uniformly illuminating an aperture (16) in front of said system (17) with light received from a light source (14), a microobjective (15) cooperable with a front objective (13) to project an image of said uniformly illuminated aperture (16) of the apparatus at infinity thereby defining a substantially

0022506

homogenous measurement light beam in the image space (22)
of said front objective (13) measurement means (23) for
effecting a measurement using said measurement light beam
and wherein said condensor lens system (17) comprises
a first condensor lens (18) for rendering parallel light
received from said light source (14), a first lens array
(19a) arranged after said first condensor lens (18) and
cooperable therewith to develop images of said light
source (14) in the individual lenses (19') of a second lens
array (19b) of the same size as said first lens array
(19a), said second lens array (19b) rendering parallel
the light emerging from points of said first lens array
(19a) and directing it to a field lens (20) cooperable with
the individual lenses of said second lens array (19b)
to image the apertures of the individual lenses (19')
of said first lens array (19a) in the first said aperture (16).

4. Optical measuring apparatus in accordance with claim 3
   and wherein said first and second lens arrays (19a, 19b)
   comprise honeycomb lens arrangements.

5. Optical measuring apparatus in accordance with any one
   of claims 1, 2 and 4 and in which the individual lenses
   (19') of said first and second honeycomb lenses (19a, 19b)
   are hexagonal with said individual lenses (19') lying
   closely proximate other individual lenses substantially
   without intervening spaces.

6. Optical measuring apparatus in accordance with claim 4 and
   wherein said first and second honeycomb lens arrangements
   (19a, 19b) are formed on opposite sides of a block (19)
   of transparent material with the second honeycomb lens
   arrangement (19b) spaced from the first honeycomb lens
   arrangement (19a) by a distance (A) equal to the focal
   length of the first honeycomb lens arrangement (19a).

7. Optical measuring apparatus in accordance with any one of claim 1 to 6 and further comprising a light source in the form of a lamp filament (14).

8. Optical measuring apparatus in accordance with any one of claims 3 to 7 and wherein said measurement means (23) includes a retro-reflector (12) positioned in the path of said measurement light beam (22).

9. A condensor lens system (17) suitable for use in the apparatus of any one of the preceding claims.

10. A honeycomb lens block (19) suitable for use in the condensor lens system (17) of claim 9.

0022506

BAD ORIGINAL

European Patent · Office

**EUROPEAN SEARCH REPORT**

0022506

Application number

EP 80 10 3706.0

## DOCUMENTS CONSIDERED TO BE RELEVANT

| Category | Citation of document with indication, where appropriate, of relevant passages | Relevant to claim |
|---|---|---|
| | DE - C - 968 430 (ZEISS IKON AG) <br> * whole document * | 1,3-7 |
| | DE - B - 1 040 281 (ZEISS IKON AG) <br> * claim; column 3, lines 19 to 23 * | 1,2 |
| | CH - A - 490 683 (E. SICK) <br> * column 2, lines 3 to 19 * | 1 |

**CLASSIFICATION OF THE APPLICATION (Int. Cl.)**

G 01 N 21/85

G 02 B 19/00

**TECHNICAL FIELDS SEARCHED (Int.Cl.)**

G 01 N 21/47

G 01 N 21/85

G 02 B 19/00

G 02 B 27/30

**CATEGORY OF CITED DOCUMENTS**

X: particularly relevant

A: technological background

O: non-written disclosure

P: intermediate document

T: theory or principle underlying the invention

E: conflicting application

D: document cited in the application

L: citation for other reasons

&: member of the same patent family, corresponding document

X The present search report has been drawn up for all claims

| Place of search | Date of completion of the search | Examiner |
|---|---|---|
| Berlin | 09-10-1980 | SCHWARTZ |

EPO Form 1503.1  06.78